# EUROPÄISCHE PATENTANMELDUNG

(11) **EP 4 753 109 A1**
(43) Veröffentlichungstag der Anmeldung: **03.06.2026**
(21) Anmeldenummer: 24215782.4
(22) Anmeldetag: 27.11.2024
(51) Int. Cl.: H02K 1/02, H02K 1/2795, H02K 1/28

(54) **AXIALFLUSSMASCHINE MIT EINEM PERMANENTMAGNETROTOR**

(71) Anmelder: Miba eMobility GmbH, 4663 Laakirchen (AT)
(72) Erfinder: Andessner, Dietmar, 4663 Laakirchen (AT); Egger, Bernhard, 4663 Laakirchen (AT); Höller, Hannes, 4663 Laakirchen (AT)
(74) Vertreter: Harringer, Thomas

(57) **Zusammenfassung**

Eine Axialflussmaschine (1) umfasst einem scheibenförmigen Stator (2) mit Statorzähnen und mit um die Statorzähne angeordnete, elektrische Wicklungen und einem entlang einer Zentralachse neben dem Stator angeordneten und um die Zentralachse drehbar ausgeführten Rotor (3). Dabei ist der Rotor (3) mehrteilig aufgebaut und weist einen oder mehrere Magneten (4) und ein aus einem weichmagnetischen Material gefertigtes Rotorjoch (6) auf. Zudem ist im Rotor zumindest je eine taschenartige Ausnehmung (8) zur Aufnahme je eines Magneten (4) vorgesehen. Die taschenartige Ausnehmung (8) und der Magnet (4) des Rotors sind auf der dem Stator zugewandten Seite angeordnet und durch eine Bauteil (7) abgedeckt und in Position gehalten. Während das Rotorjoch (6) auf der dem Stator abgewandten Seite des Rotors angeordnet ist.

## Beschreibung

Die Erfindung betrifft eine Axialflussmaschine mit einem scheibenförmigen Stator mit Statorzähnen und, um die Statorzähne angeordnete, elektrische Wicklungen und mit einem entlang einer Zentralachse neben dem Stator angeordneten und um die Zentralachse drehbar ausgeführten Rotor. Dabei ist der Rotor mehrteilig aufgebaut und weist einen oder mehrere Magneten, insbesondere Permanentmagneten, auf. Zudem ist im Rotor zumindest eine taschenartige Ausnehmung zur Aufnahme des oder der Magneten vorgesehen und ein, insbesondere aus einem weichmagnetischen Material gefertigtes, Rotorjoch vorgesehen. Die zumindest eine taschenartige Ausnehmung und der oder die Magneten des Rotors sind zumindest teilweise auf der dem Stator zugewandten Seite und das Rotorjoch ist zumindest teilweise auf der dem Stator abgewandten Seite des Rotors angeordnet.

Aus dem Stand der Technik sind verschiedene Ausführungen von Axialflussmaschinen bekannt. Durch den Einsatz von SMC-Bauteilen ("Soft Magnetic Composite"-Bauteilen) nahe der Rotormagneten kann der magnetischen Fluss auf den nächstgelegenen Statorzahn fokussiert werden und das Einfangen des durch die Magneten erzeugten magnetischen Flusses erleichtert werden. Dies führt zu einer Reduktion von Wirbelströmen, was das thermische Verhalten der Axialflussmaschine positiv beeinflusst. Überdies wird der Wirkungsgrad der elektrischen Maschine erheblich verbessert.

Ein solcher Einsatz von SMC-Bauteilen ist beispielsweise aus der US10447102B2 bekannt, die eine elektrische Maschine mit einer Permanentmagnet-Rotoranordnung zeigt, wobei eine Vielzahl an SMC-Elementen vorgesehen ist, und wobei die SMC-Elemente eine im Wesentlichen zu den Permanentmagneten komplementäre Form aufweisen und mindestens eines der mehreren SMC-Elemente so konfiguriert ist, dass sie den Magnetfluss von mindestens einem der mehreren Permanentmagneten zu mindestens einem Statorzahn der mehreren Statorzähne leitet. In US10447102B2 erfolgt die Montage der Permanentmagnete jedoch über eine Klebe- oder kraftschlüssige Verbindung.

Ein Nachteil von Klebeverbindungen besteht jedoch darin, dass je nach eingesetztem Klebstoff die Fertigungszeiten aufgrund der notwendigen Aushärtezeiten und -bedingungen negativ beeinflusst werden kann. Des Weiteren ist auch die Festigkeit von Klebstoffen der limitierende Faktor für Anwendungen mit höheren Drehzahlen.

Die Ausbildung von kraftschlüssigen Verbindungen hingegen führt üblicherweise zur Ausbildung von Eigenspannungen in den zu verbindenden Bauteilen oder Komponenten, was in Anbetracht der Tatsache, dass es bei den eingesetzten Magneten häufig um äußerst spröde Werkstoffe handelt, ungünstig ist, um Rotoren an der mechanischen Auslegungsgrenze in Bezug auf die Drehzahlgrenze auszulegen.

Es ist deshalb eine der Aufgaben der vorliegenden Erfindung einen Axialflussmotor nach dem Oberbegriff des Anspruches 1 bereitzustellen, der die Probleme aus dem Stand der Technik löst.

Die Aufgabe wird durch eine Axialflussmaschine entsprechend dem kennzeichnenden Teil des Anspruchs 1 gelöst.

Eine bevorzugte Ausführungsvariante ist dabei eine Axialflussmaschine mit einem scheibenförmigen Stator mit Statorzähnen und, um die Statorzähne angeordnete, elektrische Wicklungen und mit einem entlang einer Zentralachse neben dem Stator angeordneten und um die Zentralachse drehbar ausgeführten Rotor. Dabei ist der Rotor mehrteilig aufgebaut und weist einen oder mehrere Magneten, insbesondere Permanentmagneten, auf. Zudem ist im Rotor zumindest eine taschenartige Ausnehmung zur Aufnahme des oder der Magneten und ein, insbesondere aus einem weichmagnetischen Material gefertigtes, Rotorjoch vorgesehen. Die zumindest eine taschenartige Ausnehmung und der oder die Magneten des Rotors sind zumindest teilweise auf der dem Stator zugewandten Seite und das Rotorjoch ist zumindest teilweise auf der dem Stator abgewandten Seite des Rotors angeordnet. Darüber hinaus weist der Rotor zumindest ein SMC-Bauteil auf, wobei das zumindest eine SMC-Bauteil so an den oder die Magneten anordenbar ist, dass es den oder die Magneten zumindest teilweise zum Stator hin abdeckt. Zudem ist in der taschenartigen Ausnehmung ein Zusatzbauteil anordenbar und der oder die Magneten und das zumindest eine SMC-Bauteil werden über einen Formschluss mit dem Zusatzbauteil in der taschenartigen Ausnehmung in Position gehalten. Der Vorteil eines Formschlusses in dieser Anwendung liegt darin, dass einerseits im Vergleich mit einer kraftschlüssigen Verbindung keine/merklich geringere Eigenspannungen in die Magneten eingebracht werden. Zudem kann die Montage des oder der Magnete und des SMC-Bauteils rasch und einfach erfolgen. Je nach Ausführungsvariante des Formschlusses ergibt sich darüber hinaus auch der Vorteil, dass eine verbesserte Demontierbarkeit des oder der Magnete gegeben ist.

Bevorzugt handelt es sich bei dem Rotorjoch um ein laminiertes oder aufgewickeltes Rotorjoch, jedoch sind auch andere, dem Fachmann geläufige, Herstellungsvarianten für das Rotorjoch denkbar.

In einer bevorzugten Ausführungsvariante ist die zumindest eine taschenartige Ausnehmung zumindest teilweise durch das Rotorjoch ausgebildet. Die taschenartige Ausnehmung muss hierbei nicht vollständig durch das Rotorjoch ausgebildet sein, es ist ausreichend, wenn das Rotorjoch eine Komponente oder Fläche der taschenartigen Ausnehmung ausbildet und die übrigen Komponenten oder Flächen durch andere Elemente ausgebildet werden. Die zumindest eine taschenartige Ausnehmung kann hierbei auch auf verschiedene Weisen zumindest teilweise in das Rotorjoch eingebracht werden, beispielsweise über mechanische Bearbeitungen wie Fräsen oder Stanzen. Bei dem Rotorjoch handelt es sich dabei bevorzugt um ein aufgewickeltes Rotorjoch, jedoch sind auch andere Ausführungsformen des Rotorjochs denkbar. Das Fräsen kann hierbei, insbesondere wie in der WO2024223677A1 dargestellt erfolgen. Durch diese technische Lösung soll die Riefenbildung und/oder das Verschmieren an der Schnittstelle des Metallbandes, insbesondere die Bildung eines Grates und damit gegebenenfalls eine Berührung der, in radialer Richtung benachbarten Teile des Metallbandes, wenn das Metallband spiralförmig aufgewickelt wird, verhindert werden. Der Vorteil, dass die taschenartigen Ausnehmungen zumindest teilweise durch das Rotorjoch gebildet werden, liegt darin, dass dadurch ein sehr biegesteifes Bauteil entsteht, welches einfach zu fertigen ist.

In einer bevorzugten Ausführungsvariante sind am Rotorjoch, sich in axiale Richtung ausdehnende und radial verlaufende, Stege anordenbar. Die Stege sind dabei zwischen Rotorjoch und Stator anordenbar und die taschenartige Ausnehmung ist zumindest teilweise durch das Rotorjoch und die Stege ausgebildet. In einer möglichen Ausführungsvariante sind die Stege und das Rotorjoch dabei monolithisch ausgebildet. Es ist jedoch auch möglich, dass die Stege und das Rotorjoch separat ausgebildet sind und mittels entsprechender Verbindungstechnik an das Rotorjoch angeordnet werden. Zudem können die Stege sowohl aus dem gleichen als auch ungleichem Material wie das Rotorjoch ausgebildet sein. Der Vorteil von separat ausgebildeten Stegen liegt in einer einfacheren Fertigung des Rotorjochs, da keine zusätzliche mechanische Bearbeitung des Rotorjochs notwendig ist.

In einer bevorzugten Ausführungsvariante ist am Umfang des Rotors ein umfängliches Formelement, insbesondere ein umfängliches Halteelement, vorgesehen. Dies hat den Vorteil, dass der oder die Magneten und/oder das zumindest eine SMC-Bauteil durch das umfängliche Formelement gegen eine radiale Verschiebung abgesichert sind. Dies ist insbesondere während des Betriebs der Axialflussmaschine aufgrund der auftretenden Fliehkräfte, aber auch während der Assemblierung der Axialflussmaschine vorteilhaft.

In einer weiteren bevorzugten Ausführungsvariante grenzt das umfängliche Formelement radial unmittelbar an die taschenartige Ausnehmung an und begrenzt diese umfänglich. Der Vorteil hierbei ist ebenso eine Absicherung gegen eine radiale Verschiebung wie oben genannt. Es gilt hierbei jedoch zu berücksichtigen, dass es aufgrund des umfänglichen Formelements zu keinem magnetischen Kurzschluss zwischen SMC-Bauteil und Rotorjoch kommen darf. Das umfängliche Formelement sollte hierzu entsprechend aus nicht ferromagnetischem und möglichst schlecht leitfähigem Material ausgeformt sein. Bevorzugt kann das Formelement beispielsweise aus einem Polymer, Glas, austenitischer Stahl, Keramik oder ähnlichem aufgebaut sein. Andere Materiallösungen inklusive Verbundmaterialien sind jedoch auch denkbar.

In einer bevorzugten Ausführungsvariante ist das Zusatzbauteil dabei durch Vergießen oder einen Urformprozess aus dem plastischen Zustand, insbesondere mittels einer thermoplastischen Masse, ausgebildet. Eine beispielhafte Ausführungsform kann hier sein, dass der oder die Magnete in die zumindest eine taschenartige Ausnehmung eingelegt wird und das oder die SMC-Bauteile so an dem oder den Magneten angeordnet werden, dass der oder die Magneten zumindest teilweise zum Stator hin abgedeckt werden. Anschließend wird beispielsweise das Zusatzbauteil über eine Umspritzung mit einer thermoplastischen Masse des oder der Magnete und des oder der SMC-Bauteile, ausgebildet. Dadurch erhält das Zusatzbauteil seine zu dem oder den Magneten und das oder den SMC-Bauteilen komplementäre Geometrie und es kommt zur Ausbildung des Formschlusses. Üblicherweise ist die dem Stator zugewandte Oberfläche des zumindest einen SMC-Bauteils hierbei nicht oder nur in geringem Ausmaß von der Vergussmasse oder der Masse, die für den Urformprozess aus dem plastischen Zustand genutzt wird, bedeckt. Je nach Betriebs- und Umweltbedingungen sind jedoch auch Ausführungsvarianten denkbar, bei denen die dem Stator zugewandte Oberfläche des zumindest einen SMC-Bauteils bzw. das zumindest eine SMC-Bauteil und der oder die Magnete vollständig von der von der Vergussmasse oder der Masse, die für den Urformprozess aus dem plastischen Zustand genutzt wird, bedeckt sind.

In einer bevorzugten Ausführungsvariante der Axialflussmaschine weist das zumindest eine SMC-Bauteil eine erste, dem Stator zugewandte Oberfläche, auf und das umfängliche Formelement eine zweite, dem Stator zugewandte Oberfläche auf, und/oder das Rotorjoch eine dritte, dem Stator zugewandte und diesem am nächsten benachbarte, Oberfläche auf und/oder das Zusatzbauteil eine vierte, dem Stator zugewandte und diesem am nächsten benachbarte, Oberfläche auf. Dabei weisen die erste und zweite Oberfläche in axialer Richtung keinen Versatz zueinander auf und/oder weisen die erste und dritte Oberfläche in axialer Richtung keinen Versatz zueinander auf und/oder weisen erste und vierte Oberfläche in axialer Richtung keinen Versatz zueinander aufweisen. Das Fehlen eines axialen Versatzes zwischen erster und vierter Oberfläche ist im Hinblick auf den Formschluss zwischen SMC-Bauteil und Zusatzbauteil dahingehend vorteilhaft, dass so der Formschluss über die gesamte Dicke des SMC-Bauteils stattfinden kann.

In einer bevorzugten Ausführungsvariante ist das Zusatzbauteil, vorteilhafterweise gänzlich, am Innenumfang der taschenartigen Ausnehmungen anordenbar. Insbesondere handelt es sich bei dem Zusatzbauteil um einen Kunststoffrahmen. In einer weiteren Ausführungsvariante wird das Zusatzbauteil über einen Urformprozess aus dem plastischen Zustand, vorteilhafterweise über Spritzgießen oder Spritzpressen, in die taschenartige Ausnehmung eingebracht. In einer weiteren bevorzugten Ausführungsvariante ist die Kontur des Zusatzbauteils und die Kontur der taschenartigen Ausnehmung derart ausgeformt ist, dass das Zusatzbauteil nach Einbringung in die taschenartige Ausnehmung formschlüssig in Position gehalten wird. Der Vorteil hierbei ist eine einfache Montage des Rotors der Axialflussmaschine, da hierbei beispielsweise sowohl das Zusatzbauteil, der oder die Magnete sowie das SMC-Bauteil in den taschenartigen Ausnehmungen eingesteckt werden können und formschlüssig in Position gehalten werden. Dies hat auch insbesondere den Vorteil, dass hierbei eine gute Demontierbarkeit des oder der Magnete ebenfalls gegeben ist, was für ein nachträgliches Recycling günstig ist.

In einer weiteren Ausführungsvariante sind das umfängliche Formelement und das Zusatzbauteil monolithisch ausgebildet, wobei das umfängliche Formelement und das Zusatzbauteil vorteilhafterweise über einen Urformprozess aus dem plastischen Zustand ausgebildet werden. Indem das umfängliche Formelement und das Zusatzbauteil monolithisch ausgebildet sind ergibt sich der Vorteil, dass für eine Assemblierung weniger Arbeitsschritte notwendig sind. Es kann hier für einen raschen Fertigungsprozess auch insbesondere vorteilhaft sein, dass zuerst der oder die Magnete und das zumindest eine SMC-Bauteil in die taschenartigen Ausnehmungen eingelegt werden und das umfängliche Formelement und das Zusatzbauteil nachträglich über einen Urformprozess aus dem plastischen Zustand, beispielsweise dem Umspritzen mit einer thermoplastischen Masse, ausgebildet werden.

In einer weiteren Ausführungsvariante handelt es sich bei dem Rotorjoch um ein aufgewickeltes Rotorjoch, wobei das Rotorjoch direkt auf eine Nabe, vorteilhafterweise eine Edelstahl- oder Aluminium- buchse oder -welle aufgewickelt wird. Dies verkürzt den Fertigungsprozess, da der Rotor nicht nachträglich auf der Nabe montiert werden muss. Dabei wird das Rotorjoch durch mehrere Lagen eines spiralförmig gewickelten Metallbandes gebildet. Das Metallband weist eine vorbestimmte Dicke, Länge und Breite sowie eine gedachte Mittelebene auf, wobei die Mittelebene das Metallband entlang der Länge und in der Mitte der Dickenausdehnung des Metallbandes teilt. Das Metallband wird nach einer besonderen Ausführungsform der Erfindung in Bezug auf seine Mittelebene entlang einer Spirale gestapelt bzw. gewickelt, so dass die Lagen des Metallbandes benachbart angeordnet sind und dabei ein im wesentlichen rundes Rotorjoch bilden. Mögliche taschenartigen Ausnehmungen im Rotorjoch lassen sich dabei beispielsweise durch Stanzen oder Laserschneiden in das Metallband einbringen oder über ein Fräsen des aufgewickelten Rotorjochs. Jedoch sind auch andere, dem Fachmann geläufige, Fertigungsvarianten möglich. Mittels dieser Ausführungsvariante lassen sich auftretende Wirbelströme beim Führen von magnetischen Wechselflüssen besonders effektiv vermeiden.

In einer weiteren möglichen Ausführungsvariante ist das Zusatzbauteil als eine, auf der dem Stator zugewandten Seite des Rotorjochs angeordnete, bevorzugt monolithische, Haltestruktur ausgebildet. Die Haltestruktur besteht aus einem Polymer und die zumindest eine taschenartige Ausnehmung ist, zumindest teilweise, sowohl durch die Haltestruktur als auch das Rotorjoch ausgebildet. Diese Ausführungsvariante hat den Vorteil, dass dadurch eine mechanischen Bearbeitung des Rotorjochs zur Ausbildung der taschenartigen Ausnehmung minimal gehalten werden kann oder völlig entfällt. In einer besonderen Ausführungsvariante hiervon erfolgt die Befestigung des Zusatzbauteils dabei über die dem Stator abgewandte Seite des Rotorjochs und in der Haltestruktur sind federelastische Elemente vorgesehen, um den oder die Magneten in Position zu halten.

In einer weiteren möglichen Ausführungsvariante sind der oder die Magneten zusätzlich, im Rotor durch Vergießen oder einen Urformprozess aus dem plastischen Zustand, insbesondere mittels einer thermoplastischen Masse, fixiert. Dies kann ergänzend zu allen anderen Ausführungsvarianten erfolgen, beispielsweise für den Einsatz der Axialflussmaschine in harschen Betriebs- oder Umgebungsbedingungen.

Die Erfindung ist nachfolgend in beispielhaften, verschiedenen Ausführungsformen anhand von schematischen, nicht-einschränkenden Zeichnungen gezeigt. Es zeigen:
Fig. 1 eine schematische Ansicht einer Axialflussmaschine.
Fig. 2 a) eine schematische Ansicht, sowie b) eine Schnittansicht einer möglichen Ausführungsform eines erfindungsgemäßen Rotors mit einem Zusatzbauteil
Fig. 3 a) eine schematische Ansicht, sowie b) eine Schnittansicht einer möglichen Ausführungsform eines erfindungsgemäßen Rotors mit einem Zusatzbauteil
Fig. 4 a) eine schematische Ansicht, sowie b) eine Schnittansicht einer möglichen Ausführungsform eines erfindungsgemäßen Rotors mit einem Zusatzbauteil
Fig. 5 a) und b) zwei schematische Ansicht sowie c) eine Schnittansicht einer möglichen Ausführungsform eines erfindungsgemäßen Rotors mit einem Zusatzbauteil
Fig. 6 a) und b) weitere schematische Ansichten einer möglichen Ausführungsform eines erfindungsgemäßen Rotors mit einem Zusatzbauteil

Die Offenbarung der Veröffentlichung der WO2024223677A1 wird hiermit vollumfänglich in die Offenbarung der vorliegenden Anmeldung aufgenommen.

Einführend sei festgehalten, dass in den unterschiedlich beschriebenen Ausführungsformen gleiche Teile zumindest teilweise mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen. Diese Lageangaben sind bei einer Lageänderung sinngemäß auf die neue Lage zu übertragen.

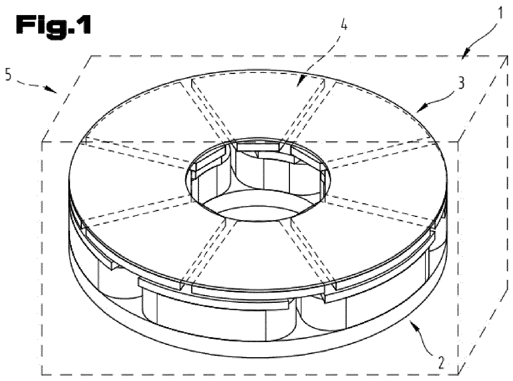

Fig. 1 zeigt eine erste Ausführungsvariante einer Axialflussmaschine 1 umfassend, zumindest einen Stator 2 und zumindest einen Rotor 3. Nach anderen möglichen Ausführungsformen (nicht dargestellt) sind Anordnungen mit mehreren Rotoren möglich, zwischen denen beispielsweise jeweils ein Stator angeordnet ist. Auf dem Rotor 3 sind Magnete 4, beispielsweise Permanentmagnete, angeordnet. Der zumindest eine Stator 2 und der zumindest eine Rotor 3 können in einem fakultativ vorhandenen Motorengehäuse 5 angeordnet sein, wie dies in Fig. 1 strichliert angedeutet ist.

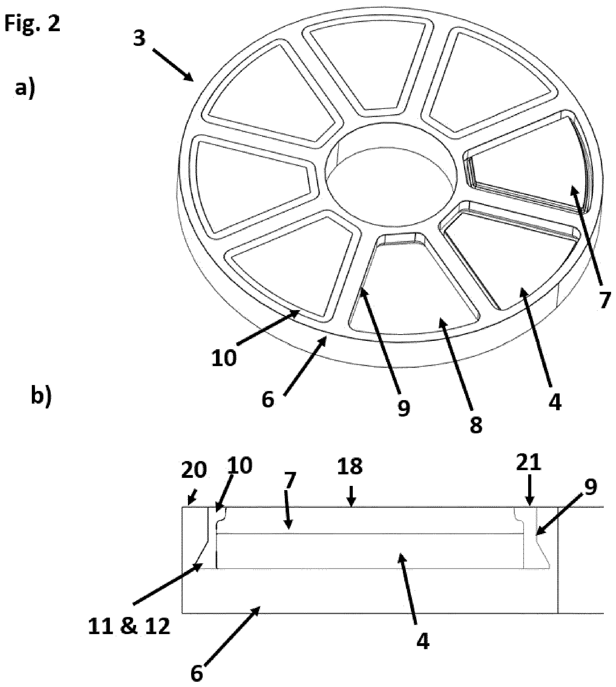

Fig. 2 a) zeigt schematische Darstellung einer möglichen, erfindungsgemäßen Ausführungsvariantes der Axialflussmasche 1. Für eine verbesserte Übersichtlichkeit ist hierbei jedoch ausschließlich der Rotor 3 dargestellt. Der Rotor 3 ist hierbei mehrteilig aufgebaut und besteht aus einem, insbesondere aus einem weichmagnetischen Material gefertigtes, Rotorjoch 6, an dem Rotorjoch angeordneten Magneten 4, insbesondere Permanentmagneten, sowie an den Magneten 4 angeordneten SMC-Bauteile 7. Das Rotorjoch 6 weist hierbei mehrere taschenartige Ausnehmungen 8 auf, in denen jeweils einer der Magnete 4 angeordnet ist. Es sind jedoch auch Ausführungsvarianten denkbar, bei denen mehrere, beispielsweise segmentierte, Magnete 4 in jeweils einer taschenartigen Ausnehmung 8 angeordnet sind. An die Magnete 4 angeordnet befinden sich jeweils ein SMC-Bauteil 7, die so ausgestaltet sind, dass sie die Magneten 4 zumindest teilweise zum Stator 2 (nicht gezeigt) hin abdecken. In Fig. 2 sind an der Innenkontur 9 der taschenartigen Ausnehmungen 8 Zusatzbauteile 10 angeordnet. Die taschenartigen Ausnehmungen 8 und die Zusatzbauteile 10 sind dabei geometrisch derart ausgeformt, dass diese formschlüssig in den taschenartigen Ausnehmungen 8 in Position gehalten werden. Dies kann beispielsweise derart erfolgen, dass in den taschenartigen Ausnehmungen 8 weitere Ausnehmungen bzw. Hinterschneidungen 11 vorgesehen sind, in denen nasenartige Ausformungen 12 des Zusatzbauteils 10 geometrisch eingreifen wie in Fig. 2 b) gezeigt. Dieser Formschluss kann jedoch auch über andere konstruktive Details gelöst sein. Ebenso in Fig. 2 b) gezeigt ist, dass die Geometrie des SMC-Bauteils 7 und des Zusatzbauteils 10 derart ausgeformt ist, dass es zwischen SMC-Bauteil 7 und Zusatzbauteil 10 ebenfalls zu einem Formschluss kommt. Dies führt dazu, dass erfindungsgemäß die Magneten 4 und die SMC-Bauteile 7 über einen Formschluss mit dem Zusatzbauteil 10 in den taschenartigen Ausnehmungen 8 in Position gehalten werden. Das Zusatzbauteil 10 kann jedoch auch über andere Maßnahmen in den taschenartigen Ausnehmungen 8 in Positionen gehalten werden, beispielsweise über eine stoff- oder kraftschlüssige Verbindung. Es ist jedoch eine bevorzugte Ausführungsform, dass das Zusatzbauteil 10 über einen Formschluss oder einen formschlüssigen Anteil in der taschenartigen Ausnehmung 8 in Position gehalten wird.

In Figur 2 und auch nachfolgenden Figuren sind zudem in einigen taschenartigen Ausnehmungen 8 darin oder daran angeordnete Elemente für eine bessere Darstellung des Aufbaus entfernt worden. So sind in einer taschenartigen Ausnehmung 8 sowohl der darin befindliche Magnet 8, das Zusatzbauteil 10, sowie ein SMC-Bauteil 7 entfernt worden. In den jeweils angrenzenden Taschen wird jeweils eines dieser Elemente hinzugefügt, um den Aufbau zu verdeutlichen.

Die taschenartigen Ausnehmungen 8 können hierbei auf verschiedene Weisen in das Rotorjoch eingebracht werden, beispielsweise über mechanische Bearbeitungen wie Fräsen oder Stanzen. Auch können die taschenartigen Ausnehmungen nur teilweise durch das Rotorjoch ausgebildet sein und die übrigen Komponenten oder Flächen über andere Elemente ausgebildet sein. Ebenso kann das Rotorjoch 6 auf verschiedene, dem Fachmann bekannte, Weisen hergestellt sein, bevorzugt handelt es sich jedoch um ein aufgewickeltes Rotorjoch.

Ebenso können die Zusatzbauteile 10 auf verschiedene Weisen in die taschenartigen Ausnehmungen 8 eingebracht werden, eine günstige Variante ist jedoch, dass diese über einen Spritzguss oder einen anderen Urformprozess aus dem plastischen Zustand eingebracht werden. Entsprechend handelt es sich bei dem Zusatzbauteil bevorzugt um einen Thermoplasten. Andere Varianten wären beispielsweise, dass es sich bei den Zusatzbauteilen um Kunststoffrahmen oder ähnliches handelt.

Darüber hinaus weisen in Figur 2 b) weisen die SMC-Bauteile 7 eine erste, dem Stator zugewandte, Oberfläche 18, und das Rotorjoch weist eine dritte, dem Stator zugewandte und diesem am nächsten benachbarte, Oberfläche 20 und das Zusatzbauteil 10 eine vierte dem Stator zugewandte und diesem am nächsten benachbarte, Oberfläche 21 auf. In einer möglichen Ausführungsvariante der Erfindung weisen die erste, die dritte und die vierte Oberfläche dabei in axialer Richtung keinen Versatz zueinander auf.

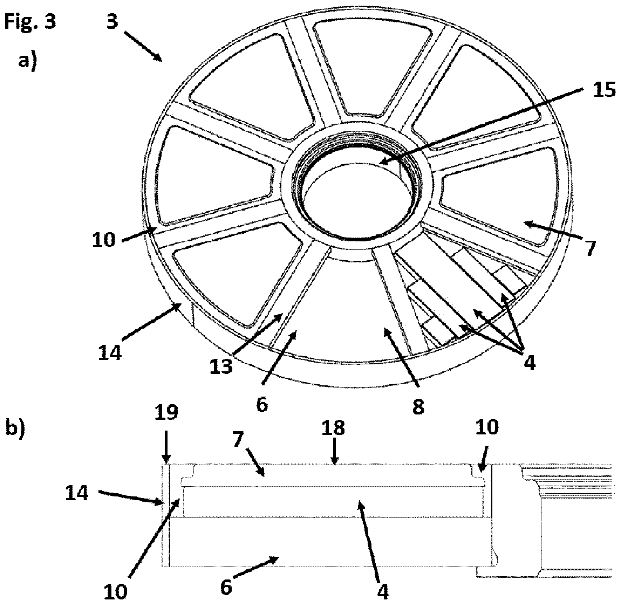

Fig. 3 a) zeigt schematische Darstellung einer möglichen, erfindungsgemäßen Ausführungsvariante der Axialflussmasche 1. Für eine verbesserte Übersichtlichkeit ist hierbei jedoch ausschließlich der Rotor 3 dargestellt. In Fig. 3 b) ist dabei eine schematische Schnittansicht dargestellt.

In Fig 3 a) sind die taschenartigen Ausnehmungen 8 über sich in axiale Richtung ausdehnende und radial verlaufende Stege 13 gemeinsam mit dem Rotorjoch 6 ausgebildet. Die Stege befinden sich hierbei zwischen Rotorjoch 6 und Stator 2 (nicht gezeigt). Die Stege 13 begrenzen die taschenartigen Ausnehmung demnach in tangentiale Richtung. In den Stegen 13 können darüber hinaus Ausnehmungen bzw. Hinterschneidungen vorgesehen sein, in denen mögliche nasenartige Ausformungen des Zusatzbauteils geometrisch eingreifen. In Fig. 3 ist dabei zusätzlich am Außenumfang des Rotorsjochs 6 ein umfängliches Formelement 14 vorgesehen, das die taschenartige Ausnehmung 8 radial begrenzt. In Fig. 3 a) sind hierbei beispielhaft mehrere Magneten 4 am Rotorjoch 6 und in den taschenartigen Ausnehmungen 8 angeordnet. An den Magneten ist jeweils wiederum ein SMC-Bauteil 7 vorgesehen, dass die Magneten 4 zumindest teilweise zum Stator 2 (nicht gezeigt) hin abdeckt. Die Magneten und die SMC-Bauteile werden hierbei wieder über Formschluss mit dem jeweils vorgesehen Zusatzbauteil 10 in Position gehalten. Hierzu weisen die SMC-Bauteile und das Zusatzbauteil 10 wiederum entsprechende konstruktive Details auf, wie beispielsweise in Figur 3 b) gezeigt.

Bevorzugt wird hierbei das Zusatzbauteil 10, nach dem Anordnen der Magnete 4 in den taschenartigen Ausnehmungen 8 und dem Anordnen der SMC-Bauteile 7 an den Magneten 4, über einen Verguss oder einen Urformprozess aus dem plastischen Zustand in die taschenartige Ausnehmung 8 eingebracht.

Die Stege 13 können hierbei einerseits monolithisch mit dem Rotorjoch 6 ausgebildet sein, es kann sich bei den Stegen 13 jedoch auch um separate Elemente handeln, die über dem Fachmann bekannten Methoden auf dem Rotorjoch 6 befestigt werden. Das Zusatzbauteil 10 kann sich hierbei ebenfalls in formschlüssigen Eingriff mit den Stegen 13 befinden.

In Fig. 3 handelt bei dem Rotorjoch 6 um ein direkt auf eine Nabe 15 aufgewickeltes Rotorjoch 6.

Darüber hinaus weisen in Figur 3 b) weisen die SMC-Bauteile 7 eine erste, dem Stator zugewandte, Oberfläche 18, und das umfängliche Formelement 14 eine zweite, dem Stator zugewandte Oberfläche 19 auf. In einer möglichen Ausführungsvariante der Erfindung weisen erste und die zweite Oberfläche dabei in axialer Richtung keinen Versatz zueinander auf.

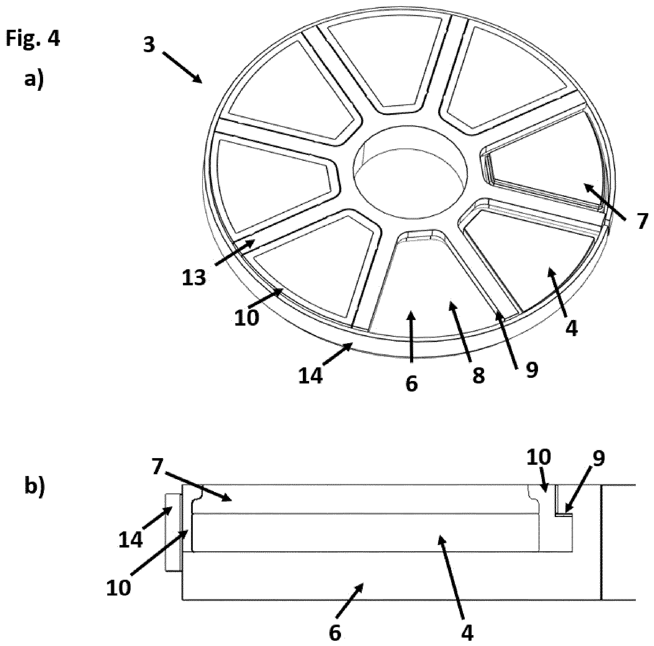

In Fig. 4 a) weist der Rotor 3 ein Rotorjoch 6 mit monolithisch ausgebildeten und, sich in axiale Richtung ausdehnende und radial verlaufende, Stege 13 auf, welche gemeinsam mit dem Rotorjoch 6 die taschenartigen Ausnehmungen 8 ausbilden. An der Innenkontur 9 der taschenartigen Ausnehmung 8 ist dabei ein Zusatzbauteil 10, insbesondere ein Kunststoffrahmen, eingebracht, wobei ein Zusatzbauteil 10 mit den jeweils benachbarten Stegen 13 in formschlüssigem Eingriff steht. In die taschenartige Ausnehmungen ist jeweils ein Magnet 4 und, axial benachbart an den Magneten angeordnet, ein SMC-Bauteil 7 eingesteckt. Diese stehen in formschlüssigem Eingriff mit dem Zusatzbauteil 10. Am Außenumfang des Rotorjochs 6 ist ein umfängliches Formelement 14 angeordnet, welches die taschenartigen Ausnehmungen 8 bzw. das Zusatzbauteil 10 radial begrenzen.

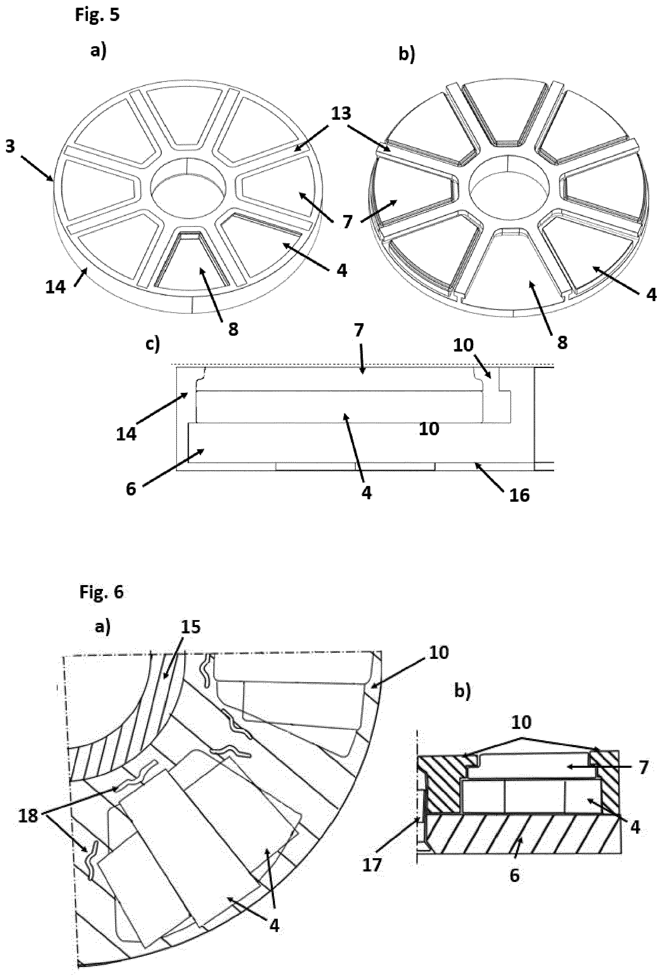

In Fig. 5 a) und b) weist der Rotor 3 ein Rotorjoch 6 mit monolithisch ausgebildeten und, sich in axiale Richtung ausdehnende und radial verlaufende, Stegen 13 auf welche die taschenartigen Ausnehmungen 8 ausbilden. Für eine verbesserte Übersichtlichkeit wurde in Darstellung b) das Zusatzbauteil 10 bzw. das umfängliche Formelement 14 entfernt. In den taschenartigen Ausnehmungen 8 sind jeweils Magnete 4 angeordnet und an den Magneten 4 sind wiederum die SMC-Bauteile 7 derart angeordnet, dass sie die Magnete zumindest teilweise zum Stator 2 (nicht gezeigt) hin abdecken. Das Rotorjoch 6 ist dabei derart ausgeformt, dass es die taschenartigen Ausnehmungen 8 radial nicht begrenzt. Nachdem die Magneten 4 und die SMC-Bauteile 7 in ihre jeweiligen taschenartigen Ausnehmungen 8 eingelegt wurden, werden diese derart umspritzt, dass sich monolithisch sowohl das Zusatzbauteil 10 als auch das umfängliche Formelement 14 ausbildet. Demnach handelt es sich bei dieser Ausführungsvariante bei dem Zusatzbauteil 10 und dem umfänglichen Formelement 14 um keine separaten Elemente mehr, sondern sie werden gemeinsam durch eine monolithische Struktur ausgebildet. Die Magnete 4 und die SMC-Bauteile 7 sind dabei derart ausgeformt, dass sie mit dieser monolithischen Struktur in formschlüssigen Eingriff stehen. Auch begrenzt diese monolithische Struktur die taschenartigen Ausnehmungen 8 bzw. die Magneten 4 und die SMC-Bauteile 7 in radiale Richtung. Die Umspritzung kann hierbei auch an der dem Stator abgewandten Seite 16 des Rotorjochs 6 erfolgen, beispielsweise wenn dies für die vorliegenden Betriebs- oder Umgebungsbedingungen notwendig ist.

In Fig. 6 weist der Rotor 3 ein Rotorjoch 6 auf und ein Zusatzbauteil 10, welches an der dem Stator 2 (nicht gezeigt) zugewandten Seite des Rotorjochs angeordnet ist, auf. Bei dem Zusatzbauteil 10 handelt es sich hierbei um eine monolithisch ausgebildete Haltestruktur, die gemeinsam mit dem Rotorjoch 6 die taschenartigen Ausnehmungen 8 ausbildet. Die Haltestruktur kann dabei beispielsweise mittels Befestigungselementen 17 an dem Rotorjoch 6 befestigt sein. In den taschenartigen Ausnehmungen 8 sind wiederum die Magnete 4 und axial benachbart zu den Magneten 4 die jeweiligen SMC-Bauteile 7 angeordnet, die die Magneten zum Stator 2 (nicht gezeigt) hin zumindest teilweise abdecken. Bei den Magneten 4 kann es sich hierbei auch um segmentierte Magneten handeln. Das Zusatzbauteil 10, die Magneten 4 und die SMC-Bauteile 7 sind dabei geometrisch derart ausgebildet, dass die Magneten 4 und die SMC-Bauteile 7 über einen Formschluss in den taschenartigen Ausnehmungen 8 in Position gehalten werden. Falls erforderlich und wie in Fig. 6 schematisch gezeigt, können in dem Zusatzbauteil 10 auch federelastische Elemente 18 vorgesehen sein, welche die Magneten 4 und/oder die SMC-Bauteile 7 zusätzlich in Position halten.

## Patentansprüche

1. Axialflussmaschine mit einem scheibenförmigen Stator mit Statorzähnen und, um die Statorzähne angeordnete, elektrische Wicklungen und mit einem entlang einer Zentralachse neben dem Stator angeordneten und um die Zentralachse drehbar ausgeführten Rotor, wobei der Rotor mehrteilig aufgebaut ist und einen oder mehrere Magneten, insbesondere Permanentmagneten, aufweist und im Rotor zumindest eine taschenartige Ausnehmung zur Aufnahme des oder der Magneten vorgesehen ist und wobei ein, insbesondere aus einem weichmagnetischen Material gefertigtes, Rotorjoch vorgesehen ist, wobei die zumindest eine taschenartige Ausnehmung und der oder die Magneten des Rotors zumindest teilweise auf der dem Stator zugewandten Seite und das Rotorjoch zumindest teilweise auf der dem Stator abgewandten Seite des Rotors angeordnet ist, **dadurch gekennzeichnet, dass** der Rotor zumindest ein SMC-Bauteil aufweist, wobei das zumindest eine SMC-Bauteil so an den oder die Magneten anordenbar ist, dass es den oder die Magneten zumindest teilweise zum Stator hin abdeckt, und wobei in der taschenartigen Ausnehmung ein Zusatzbauteil anordenbar ist und wobei der oder die Magneten und das zumindest eine SMC-Bauteil über einen Formschluss mit dem Zusatzbauteil in der taschenartigen Ausnehmungen in Position gehalten werden.

2. Axialflussmaschine nach Anspruch 1, **dadurch gekennzeichnet, dass** die zumindest eine taschenartige Ausnehmung zumindest teilweise durch das Rotorjoch ausgebildet ist.

3. Axialflussmaschine nach Anspruch 1 oder 2, **dadurch gekennzeichnet, dass** am Rotorjoch sich in axiale Richtung ausdehnende und radial verlaufende Stege anordenbar sind, wobei die Stege zwischen Rotorjoch und Stator angeordnet sind und wobei die taschenartige Ausnehmung zumindest teilweise durch das Rotorjoch und die Stege ausgebildet ist.

4. Axialflussmaschine nach einem der vorhergehenden Ansprüche, **dadurch gekennzeichnet, dass** am Umfang des Rotors ein umfängliches Formelement, insbesondere ein umfängliches Halteelement, vorgesehen ist.

5. Axialflussmaschine nach Anspruch 4, **dadurch gekennzeichnet, dass** das umfängliche Formelement radial unmittelbar an die taschenartige Ausnehmung angrenzt und diese umfänglich begrenzt.

6. Axialflussmaschine nach einem oder mehreren der vorhergehenden Ansprüche, **dadurch gekennzeichnet, dass** das Zusatzbauteil durch Vergießen oder einen Urformprozess aus dem plastischen Zustand, insbesondere mittels einer thermoplastischen Masse, ausgebildet ist.

7. Axialflussmaschine nach einem oder mehreren der vorhergehenden Ansprüche, **dadurch gekennzeichnet, dass** das zumindest eine SMC-Bauteil eine erste, dem Stator zugewandte, Oberfläche, aufweist und das umfängliche Formelement eine zweite, dem Stator zugewandte Oberfläche aufweist, und/oder das Rotorjoch eine dritte, dem Stator zugewandte und diesem am nächsten benachbarte, Oberfläche aufweist und/oder das Zusatzbauteil eine vierte, dem Stator zugewandte und diesem am nächsten benachbarte, Oberfläche aufweist und wobei erste und zweite Oberfläche in axialer Richtung keinen Versatz zueinander aufweisen und/oder erste und dritte Oberfläche in axialer Richtung keinen Versatz zueinander aufweisen und/oder erste und vierte Oberfläche in axialer Richtung keinen Versatz zueinander aufweisen.

8. Axialflussmaschine nach einem der vorhergehenden Ansprüche, **dadurch gekennzeichnet, dass** das Zusatzbauteil, vorteilhafterweise gänzlich, am Innenumfang der taschenartigen Ausnehmungen anordenbar ist und wobei es sich bei dem Zusatzbauteil insbesondere um einen Kunststoffrahmen handelt.

9. Axialflussmaschine nach Anspruch 8, **dadurch gekennzeichnet, dass** das Zusatzbauteil über einen Urformprozess aus dem plastischen Zustand, vorteilhafterweise über Spritzgießen oder Spritzpressen, in die taschenartige Ausnehmung eingebracht wird.

10. Axialflussmaschine nach Anspruch 8 oder 9, **dadurch gekennzeichnet, dass** die Kontur des Zusatzbauteils und die Kontur der taschenartigen Ausnehmung derart ausgeformt ist, dass das Zusatzbauteil nach Einbringung in die taschenartige Ausnehmung formschlüssig in Position gehalten wird.

11. Axialflussmaschine nach Anspruch 4 und Anspruch 8, **dadurch gekennzeichnet, dass** das umfängliche Formelement und das Zusatzbauteil monolithisch ausgebildet sind, wobei das umfängliche Formelement und das Zusatzbauteil vorteilhafterweise über einen Urformprozess aus dem plastischen Zustand ausgebildet werden.

12. Axialflussmaschine nach einem oder mehreren der vorhergehenden Ansprüche, **dadurch gekennzeichnet, dass** es sich bei dem Rotorjoch um ein aufgewickeltes Rotorjoch handelt, wobei das Rotorjoch direkt auf eine Nabe, vorteilhafterweise eine Edelstahlbuchse oder -welle aufgewickelt wird.

13. Axialflussmaschine nach einem oder mehreren der vorhergehenden Ansprüche, **dadurch gekennzeichnet, dass** das Zusatzbauteil als eine, auf der dem Stator zugewandten Seite des Rotorjochs angeordnete, bevorzugt monolithische, Haltestruktur ausgebildet ist, wobei die Haltestruktur aus einem Polymer besteht und wobei die zumindest eine taschenartige Ausnehmung, zumindest teilweise, sowohl durch die Haltestruktur als auch das Rotorjoch ausgebildet wird.

14. Axialflussmaschine nach Anspruch 13, **dadurch gekennzeichnet, dass** die Befestigung des Zusatzbauteils über die dem Stator abgewandte Seite des Rotorjochs erfolgt und in der Haltestruktur federelastische Elemente vorgesehen sind um den oder die Magneten in Position zu halten.

15. Axialflussmaschine nach einem der vorhergehenden Ansprüche, **dadurch gekennzeichnet, dass** der oder die Magneten zusätzlich, im Rotor durch Vergießen oder einen Urformprozess aus dem plastischen Zustand, insbesondere mittels einer thermoplastischen Masse, fixiert sind.
